# EUROPÄISCHE PATENTSCHRIFT

(11) **EP 2 860 009 B1**
(45) Veröffentlichungstag und Bekanntmachung des Hinweises auf die Patenterteilung: **09.01.2019**
(21) Anmeldenummer: 13188305.0
(22) Anmeldetag: 11.10.2013
(51) Int. Cl.: B29C 45/14

(54) **Verfahren zu der Herstellung von verstärkten Formkörper**
Method for their manufacture of reinforced moulded items
Procédé de fabrication de corps moulés renforcés

(43) Veröffentlichungstag der Anmeldung: 15.04.2015
(73) Patentinhaber: EMS-PATENT AG, 7013 Domat / Ems (CH)
(72) Erfinder: Jeltsch, Thomas, Dipl. Ing., 7013 Domat/Ems (CH); Henkelmann, Bernd, Dipl. Ing. FH, 7402 Bonaduz (CH)
(74) Vertreter: Pfenning, Meinig & Partner mbB

(56) Entgegenhaltungen:
- EP-A1- 0 313 171
- EP-A1- 1 577 073
- DE-A1- 10 213 798
- GB-A- 2 384 461
- JP-A- H1 119 972
- JP-A- H08 252 837

## Beschreibung

Die Erfindung betrifft ein Verfahren zur Herstellung von mit Faserbändchen verstärkten Formkörpern.
Auf Grund des Bestrebens Metalle durch Kunststoffe zu ersetzen, werden an deren mechanische Eigenschaften immer höhere Anforderungen gestellt. Eine gängige Vorgehensweise zum Verbessern der mechanischen Eigenschaften besteht im Einbringen von faserförmigen Verstärkungsstoffen, wie z.B. Glas- oder Kohlefasern, in die Kunststoffmatrix. Auch Bauteile aus einem derart verstärkten Kunststoff weisen jedoch oft deutlich geringere Steifigkeiten als Metallbauteile auf.

Eine weitere Verbesserung lässt sich durch selektive Verstärkung der Formkörper mit Faserbändchen erreichen. Dies gelingt z.B. durch das gezielte Auf- oder Einbringen dieser Faserbändchen an bzw. in den Formkörper.
Eine der wichtigsten Methoden zum Herstellen von Kunststoff-Formkörpern stellt der Spritzgussprozess dar. Aus ökonomischen Gründen ist es wünschenswert das oder die Faserbändchen bereits im Spritzgussprozess in den Formkörper ein- oder an diesen anzubringen und keinen separaten Schritt nachzuschalten.

Aus der GB2384461 ist ein Verfahren zur Herstellung eines Formkörpers mit mindestens einer Verstärkung mittels unidirektional orientierten und in einer ersten Kunststoffmatrix eingebetteten Fasern bekannt.

Aus der DE 10 2011 077 834 A1 ist ein Verfahren zur Herstellung eines Faserverbund-Strukturteils durch Spritzgießen oder Spritzpressen bekannt. Dabei wird ein vorgefertigtes Halbzeug in ein Spritzgusswerkzeug eingelegt und nach dem Schließen des Werkzeugs ein faserverstärkter Kunststoff eingespritzt. Die sichere Lage des Halbzeugs im Werkzeug wird dabei durch Spannelemente gewährleistet.

Ein anderes Verfahren zur Herstellung von partiell mit Endlosfasern verstärkten Spritzgussbauteilen beschreibt die DE 10 2007 037 680 A1. Hier kommt eine spezielle Werkzeugform zur Anwendung, die das Einfahren von Nadeln in die Werkzeugform gestattet. Mit diesen Nadeln wird ein Endlosfaserhalbzeug vor dem Einspritzen eines thermoplastischen Kunststoffs in der Werkzeugform positioniert. Nach dem Einspritzen werden die Nadeln zurückgefahren.

Die DE 10 2011 120 986 A1 beschreibt ein Spritzgussverfahren zur Fertigung eines Faserverbund-Hohlprofilbauteils mit angespritzten Form- und/oder Funktionsstrukturen. Hierbei wird zunächst in einem ersten Werkzeug ein Kern gegossen, welcher dann mit einem in einen Duroplasten getränkten Fasermaterial umwickelt wird. In einem zweiten Werkzeug wird dieser umwickelte Kern zumindest teilweise gehärtet und Funktions- oder Formstrukturen angespritzt. Nach Entformen des Hohlprofils wird der Kern zumindest auf seine Schmelzetemperatur erwärmt und aus dem Hohlprofil ausgeschmolzen.

Ausgehend hiervon war es Aufgabe der vorliegenden Erfindung, ein Verfahren zur Herstellung von mit Faserbändchen verstärkten thermoplastischen Formkörpern bereitzustellen, das eine sichere Fixierung der Faserbändchen während des Spritzgussprozesses ermöglicht. Weiterhin war es Aufgabe der vorliegenden Erfindung ein Verfahren bereitzustellen, das apparativ einfach ist und den Einsatz speziell modifizierter Spritzgusswerkzeuge überflüssig macht.

Diese Aufgabe wird durch das Verfahren zur Herstellung von mit Faserbändchen verstärkten Formkörpern mit den Merkmalen des Anspruchs 1 gelöst. Die weiteren abhängigen Ansprüche zeigen vorteilhafte Weiterbildungen auf. Erfindungsgemäß wird ein Verfahren zur Herstellung eines Formkörpers mit mindestens einer Verstärkung mittels unidirektional orientierten und in einer ersten Kunststoffmatrix eingebetteten Fasern bereitgestellt, das folgende Schritte umfasst.
a) Bereitstellen eines Vorformlings enthaltend mindestens ein Faserbändchen, wobei in Längsrichtung des mindestens einen Faserbändchens an einem Ende eine Halterung und am anderen Ende zumindest eine entlang der Längsrichtung des mindestens einen Faserbändchens bewegliche Fixiereinheit angebracht wird,
b) Einlegen und Fixieren des Vorformlings in ein Spritzgusswerkzeug, wobei das Ende mit der Halterung am Fließwegende des Spritzgusswerkzeugs angeordnet wird,
c) Einspritzen einer zweiten Kunststoffmatrix durch den Schmelzekanal, so dass die Fixiereinheit durch den Schmelzestrom zum anderen Ende des Vorformlings transportiert wird sowie
d) Erkalten und Aushärten des Formkörpers.

Dabei ist es bevorzugt, dass die Fixiereinheit so angeordnet ist, dass das zumindest eine Faserbändchen an einer inneren Seitenfläche des Spritzgusswerkzeugs anliegt und die Fixiereinheit während des Einspritzens so geführt wird, dass die zweite Kunststoffmatrix und das mindestens eine Faserbändchen vollflächig und planar miteinander verbunden sind und das Faserbändchen zumindest bereichsweise eine Oberfläche des Formkörpers bildet.

Eine weitere bevorzugte Ausführungsform sieht vor, dass die Fixiereinheit so angeordnet ist, dass zwei Faserbändchen an gegenüberliegenden inneren Seitenflächen des Spritzgusswerkzeugs anliegen und die Fixiereinheit während des Einspritzens so geführt wird, dass die zweite Kunststoffmatrix und die Faserbändchen vollflächig und planar miteinander verbunden sind und die beiden Faserbändchen zumindest bereichsweise gegenüberliegende Oberflächen des Formkörpers bilden.

Es ist weiterhin bevorzugt, dass die Fixiereinheit in der ersten Hälfte, besonders bevorzugt im ersten Drittel des Längenabschnitts der Faserbändchen angebracht wird, der dem Ende mit der Halterung gegenüberliegt. Insbesondere bevorzugt ist es die Fixiereinheit am Ende des Vorformlings anzubringen.

Die erste Kunststoffmatrix der Faserbändchen und/oder die einzuspritzende zweite Kunststoffmatrix ist vorzugsweise ausgewählt aus der Gruppe bestehend aus Thermoplasten und Duroplasten und/oder Mischungen daraus, wobei Thermoplaste bevorzugt sind.

Wenn die erste Kunststoffmatrix und/oder die zweite Kunststoffmatrix ein Thermoplast ist, ist dieser vorzugsweise ausgewählt aus der Gruppe bestehend aus Acetalharze, flüssigkristalline Polymere, Polyacrylate, Polymethacrylate, olefinische und cycloolefinische Polymere, Polyamide, Polyamidelastomere, insbesondere Polyesteramide, Polyetheramide und Polyetheresteramide, Polyamidimide, Polyarylether beeinhaltend Polyphenylether, Polycarbonate, Polysulfone, Polyetherimide, Polyimide, Polyester, Polyester-Polycarbonate, Polyether, Polyoxyethylene, Polystyrol, vinylische Polymere wie Polyvinylchlorid und Polyvinylacetat, oder Mischungen aus einem oder mehreren der aufgezählten Materialien, insbesondere ABS, MBS, SAN, PC und PMMA.

Die thermoplastischen erste und/oder zweite Kunststoffmatrix weist bevorzugt Schmelzpunkte von 50 bis 500°C, bevorzugt von 170 bis 400°C und besonders bevorzugt von 170 bis 350°C und/oder eine Glasübergangstemperatur im Bereich von 30 bis 250°C, bevorzugt im Bereich von 30 bis 170°C, besonders bevorzugt im Bereich von 35 bis 135°C auf.

Als thermoplastische erste und/oder zweite Kunststoffmatrix werden bevorzugt Matrizes aus Polyamid verwendet. Die Polyamide werden dabei bevorzugt aus aliphatischen beinhaltend cycloaliphatischen Diaminen und aromatischen oder aliphatischen Dicarbonsäuren oder aus Lactamen erhalten. Besonders bevorzugt werden Homo- und Co-Polyamide gebildet aus cycloaliphatischen C6-C17-Diaminen und/oder aliphatischen C4-C12-Diaminen mit aliphatischen C4-C20-Dicarbonsäuren und/oder aromatischen Dicarbonsäuren verwendet.

Spezielle, nicht limitierende Beispiele für die Dicarbonsäuren sind Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, 1,4-Cyclohexandicarbonsäure, Eicosandisäure, Naphthalindicarbonsäure, Terephthalsäure und Isophthalsäure.

Bevorzugt sind alternativ auch Polyamide, die gebildet sind aus den vorgenannten Diaminen und Dicarbonsäuren sowie Lactamen mit 4 bis 15 C-Atomen und/oder α,ω-Aminosäuren mit 4 bis 15 C-Atomen.

Spezielle, nicht limitierende Beispiele für die Diamine sind Hexamethylendiamin, Heptamethylendiamin, Octamethylendiamin, Nonamethylendiamin, Decamethylendiamin, Undecamethylendiamin, Dodecamethylendiamin, Trimethylhexamethylendiamin, 2-Methyl-1,5-pentandiamin, Isophorondiamin, Norbornandiamin, 1,3-Bis(aminomethyl)cyclohexan, MACM, MXD, PACM, PXD und TMACM.

MACM steht für 3,3'-Dimethyl-4,4'-diaminocyclohexylmethan, MXD steht für meta-Xylylendiamin, PACM steht für 4,4'-Diaminocyclohexylmethan, PXD steht für para-Xylylendiamin und TMACM steht für 3,3',5,5'-Tetramethyl-4,4'-diaminocyclohexylmethan.

Weiterhin bevorzugt sind Polyamide aus MXD und Terephthalsäure, oder MXD und Isophthalsäure.

Bevorzugte transparente Polyamide sind ausgewählt aus der Gruppe: MACM9-18, PACM9-18, MACMI/12, MACMI/MACMT, MACMI/MACMT/12, 6I6T/MACMI/MACMT/12, 3-6T, 6I6T, 6I/MACMI/MACMT, 6I/PACMI/PACMT, 6I/6T/MACMI, MACMI/MACM36, 6I, 12/PACMI, MXDI/6I oder 12/MACMT, 6/PACMT, 6/6I, 6/IPDT oder Mischungen daraus, wobei 50 mol-% der IPS durch TPS ersetzt sein kann.

Weiterhin bevorzugt sind teilkristalline Polyamide ausgewählt aus der Gruppe bestehend aus PA6, PA66, PA69, PA610, PA612, PA11, PA12, PA1010, PA1012, PA1210, PA1212. Besonders bevorzugt sind PA 12 und Mischungen aus PA 66 und PA 6I/6T.

Es ist bevorzugt wenn die erste Kunststoffmatrix einen kleineren Schmelzpunkt als die zweite Kunststoffmatrix aufweist. Bevorzugt liegt der Schmelzpunkt der ersten Kunststoffmatrix um 1 bis 300°C, bevorzugt um 20 bis 150°C tiefer als der der zweiten Kunststoffmatrix.

Wenn die erste und/oder zweite Kunststoffmatrix ein Duroplast ist, ist dieser bevorzugt aus der Gruppe bestehend aus Melaminharzen, Phenoplasten, Polyesterharzen, Aminoplasten, Epoxidharzen, Polyurethanen, vernetzten Polyacrylaten und/oder deren Mischungen oder Blends ausgewählt.

Auch die zweite Kunststoffmatrix ist in einer bevorzugten Ausführungsform faserverstärkt, vorzugsweise ist sie mit Kohle- oder Glasfasern mit flachem oder rundem Querschnitt verstärkt. Hierbei sind Fasern mit einer Länge von 0.1 bis 50 mm und einem Durchmesser von 5 bis 40 µm bevorzugt. Der Anteil an Verstärkungsstoffen beträgt für Kohlefasern von 3 bis 50 Gew.-%, bevorzugt 5 bis 40 Gew.-% und für Glasfasern 5 bis 75 Gew.-%, bevorzugt von 15 bis 65 Gew.-% und insbesondere bevorzugt von 30 bis 50 Gew.-%, jeweils bezogen auf die Gesamtmasse der zweiten Kunststoffmatrix und der optional vorhandenen weiteren Zusatzstoffe.

Es ist aber auch möglich unverstärkte Kunststoffmatrizes zu verwenden.

Die erste und/oder zweite Kunststoffmatrix können vorzugsweise weitere Zusatzstoffe aufweisen. Diese sind bevorzugt ausgewählt aus der Gruppe bestehend aus anorganischen Stabilisatoren, organischen Stabilisatoren, Gleitmitteln, Entschäumern, kettenverlängernden Additiven, optischen Aufhellern, Weichmachern, Haftvermittlern, halogenhaltigen Flammschutzmitteln, halogenfreien Flammschutzmitteln, Schlagzähmodifikatoren, Partikeln, Füll- und Verstärkungsstoffen, Farbstoffe, Pigmente und/oder deren Mischungen.

Der Anteil der weiteren Zusatzstoffe beträgt bevorzugt 0.1 bis 20 Gew.-% und insbesondere bevorzugt 0.5 bis 10 Gew.-% bezogen auf die Gesamtmasse der ersten und/oder zweiten Kunststoffmatrix und der Verstärkungsstoffe.

Vorzugsweise wird als Fixiereinheit ein Spreizkeil eingesetzt. Erfindungsgemäss ist jede Art von Fixiereinheit, die zum einen sicheren Halt der Faserbändchen vom Zeitpunkt des Einspritzens bis zum Aushärten der zweiten Kunststoffmatrix gewährleistet und die zum anderen durch die zweite Kunststoffmatrix an das gegenüberliegende Ende des Faserbändchen zur Halterung transportiert wird. Denkbar sind z.B. propfen-, block- oder pfeilförmige Fixiereinheiten, die in bevorzugten Ausführungsformen Federelemente enthalten.

Die zum Herstellen des Vorformlings verwendete Halterung und die Fixiereinheit können aus allen Materialien bestehen, die bereits für die erste und/oder zweite Kunststoffmatrix genannt wurden, auch für die Halterung und die Fixiereinheit sind die bereits genannten Polyamide die bevorzugten Materialien.

In einer bevorzugten Ausführungsform sind die Halterung und die Fixiereinheit aus identischen Materialien hergestellt. Weiterhin ist es bevorzugt, dass Halterung und Fixiereinheit einen gleichen oder tieferen Schmelzpunkt aufweisen als die zweite Kunststoffmatrix. Bevorzugt ist es dabei, dass der Schmelzpunkt von Halterung und Fixiereinheit um 0 bis 300, bevorzugt um 20 bis 150°C, insbesondere bevorzugt 40 bis 130°C tiefer liegt als von der zweiten Kunststoffmatrix.

In einer besonders bevorzugten Ausführungsform sind die Halterung und die Fixiereinheit aus demselben Material hergestellt, insbesondere bevorzugt ist es, für die Halterung, die Fixiereinheit und die zweite Kunststoffmatrix dasselbe Material zu wählen.

Die Halterung und die Fixiereinheit werden bevorzugt über Rapid-Prototyping-, Extrusions-, Spritzgussverfahren oder spanende Verfahren hergestellt.

Vorzugsweise sind die Fasern Endlosfasern oder Stapelfasern, insbesondere Kohle-, Glas-, Mineral- oder Aramidfasern. Besonders bevorzugt sind hier Kohle- und Glasfasern mit flachem oder rundem Querschnitt, insbesondere bevorzugt sind Kohlefasern. Es können auch Mischungen aus den genannten Fasern verwendet werden.

Der Anteil der Faserbändchen an Fasern beträgt vorzugsweise 1 bis 60 Gew.-%, besonders bevorzugt 5 bis 50 Gew.-% und insbesondere bevorzugt 10 bis 40 Gew.-% bezogen auf die Gesamtmasse des Faserbändchens.

Die Dicke der Faserbändchen beträgt vorzugsweise von 0.1 bis 5 mm, bevorzugt von 0.2 bis 2.0 mm und besonders bevorzugt von 0.2 bis 1.0 mm. Die Breite der Faserbändchen beträgt vorzugsweise von 1 bis 40 mm, bevorzugt von 2 bis 20 mm und besonders bevorzugt von 5 bis 15 mm.

Die Faserbändchen können auf der Ober- und Unterseite oder auch nur auf einer der beiden Seiten geprägt sein. Außerdem kann sich die Prägung über die komplette Oberfläche erstrecken oder sich auf Teile der Oberfläche beschränken.

Je nach Dicke des Formkörpers können auch mehrere Faserbändchen nebeneinander angeordnet werden. Außerdem ist es möglich Laminate aus Faserbändchen zu verwenden. Diese Laminate werden bevorzugt für komplexere Geometrien wie z.B. Spiralen, gebogene oder S-Förmige Strukturen verwendet.

Eine bevorzugte Ausführungsform sieht einen Vorformling aus 2 Faserbändchen vor.

In einer weiteren bevorzugten Ausführungsform werden die Faserbändchen im Vorformling in einem Abstand von 0.1 bis 100 mm, bevorzugt von 0.3 bis 30 mm und insbesondere bevorzugt von 1 bis 10 mm zueinander positioniert.

Durch geeignetes Design der beweglichen Fixiereinheit ist es möglich auch Vorformlinge zu gestalten in denen der Abstand der Faserbändchen nicht über die komplette Weglänge einheitlich ist. In einer bevorzugten Ausführungsform ist der Spreizkeil dabei V-förmig gestaltet und der Öffnungswinkel passt sich reversibel dem Abstand der Faserbändchen an.

Ausserdem ist es möglich Faserbändchen oder Laminate aus Faserbändchen mit komplexeren Geometrien wie z.B. Spiralen, oder S-förmige Strukturen zu verwenden. Bevorzugt ist es Faserbändchen mit flacher Geometrie einzusetzen.

Der Vorformling wird im Werkzeug durch Einklemmen oder Einkleben der Halterung oder durch Ansaugen der Halterung mit Vakuum fixiert. Bevorzugt ist es den Vorformling einzuklemmen.

Die mindestens eine Fixiereinheit wird beim Einspritzen der Kunststoffmatrix bevorzugt durch 2 Faserbändchen geführt. In Varianten in denen nur ein Faserbändchen verwendet wird, wird die Fixiereinheit durch das Faserbändchen und eine Wand des Werkzeugs geführt. Die Fixiereinheit wird durch den Schmelzestrom zum gegenüberliegenden Ende des Faserbändchens transportiert und kommt vor der Halterung zu Liegen.

Optional kann der Teil des Formkörpers, in dem die Fixiereinheit zu liegen kommt und in dem sich die Halterung befindet, abgetrennt werden. Das Abtrennen kann über Schneiden, Laserbehandlung, Quetschen, Sägen, Wasserstrahlen, Knicken oder Kombinationen dieser Maßnahmen erfolgen.

Eine weitere Variante des erfindungsgemäßen Verfahrens sieht vor, für die Halterung und die Fixiereinheit Materialien mit einem gleichen oder niedrigeren Schmelzpunkt von 0 bis 300°C, bevorzugt 20 bis 150°C zu verwenden. Das Verbindungstück und die Fixiereinheit können dann einfach nach dem Einspritzen der Kunststoffmatrix durch Aufschmelzen in den Formkörper integriert werden.

Ein über das erfindungsgemäße Verfahren herstellbarer faserverstärkter Spritzguss-Formkörper weist mindestens ein Faserbändchen aus in einer ersten Kunststoffmatrix unidirektional eingebetteten Fasern sowie mindestens eine zweite Kunststoffmatrix auf, wobei mindestens eine Oberfläche des Formkörpers zumindest bereichsweise aus dem mindestens einen Faserbändchen gebildet ist.

Vorzugsweise weist der Formkörper an zwei gegenüberliegenden Oberflächen zumindest bereichsweise jeweils mindestens ein Faserbändchen auf, wobei der Abstand der Faserbändchen zueinander gleich oder verschieden ist und vorzugsweise im Bereich von 0,1 bis 100 mm, bevorzugt 0,3 bis 30 mm und besonders bevorzugt 1 bis 10 mm liegt.

Der Formkörper ist nach dem zuvor beschriebenen Verfahren herstellbar.

Die nach dem erfindungsgemäßen Verfahren herstellbaren verstärkten Formkörper finden insbesondere Verwendung als:
- Automobilteile, bevorzugt Fahrwerksbauteile, Streben, Interieurteile, Exterieurteile, Getriebebauteile und Felgen;
- Industrie- und Konsumgüter, bevorzugt Hebel, Befestigungen, Gartengeräte, Werkzeuge, Haushaltsgeräte, Sanitärbauteile, Schläger, Bögen und Schuhe.

Der erfindungsgemäße Gegenstand soll anhand der nachfolgenden Figuren näher beschrieben werden, ohne diesen auf die hier gezeigten spezifischen Ausführungsformen einschränken zu wollen.

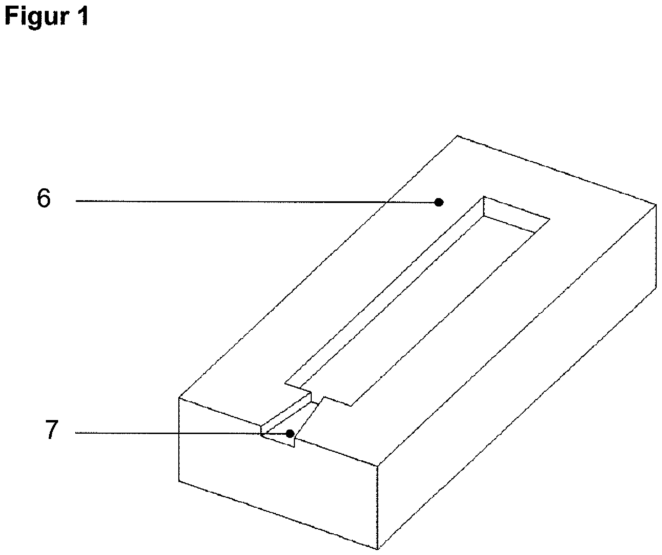

Fig. 1 zeigt anhand einer schematischen Darstellung die Auswerferseite einer Formteilhälfte des Spritzgusswerkzeugs 6. Die zweite Kunststoffmatrix 8 wird durch den Schmelzekanal 7 in das Spritzgusswerkzeug 6 eingebracht.

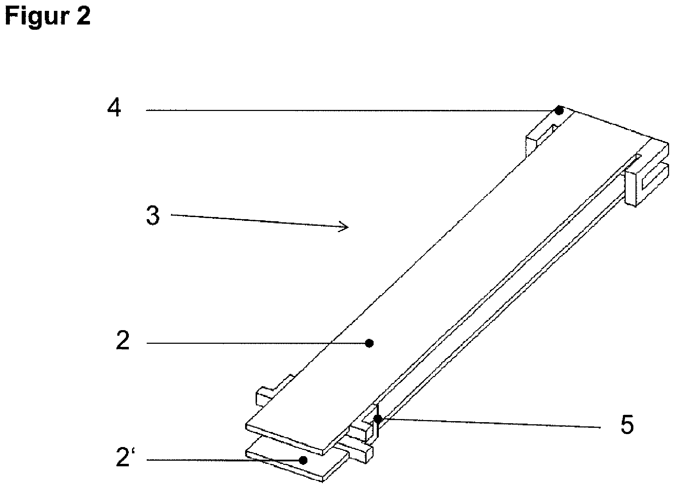

Fig. 2 zeigt anhand einer schematischen Darstellung den Aufbau eines Vorformlings 3. Die Faserbändchen 2, 2' werden dabei durch eine Halterung 4 und einen Spreizkeil 5 fixiert.

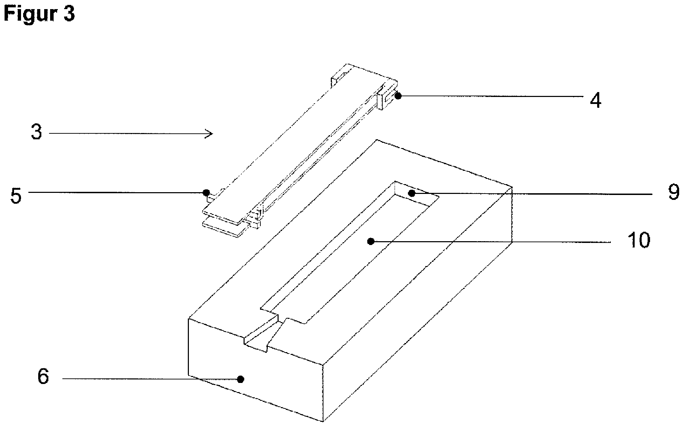

Fig. 3 zeigt anhand einer schematischen Darstellung das Einlegen eines Vorformlings 3 in ein Spritzgusswerkzeug 6. Der Vorformling 3 wird dabei derart in das Spritzgusswerkzeug 6 eingelegt, dass die Halterung 4 auf der dem Schmelzekanal 7 gegenüberliegenden Seite des Spritzgusswerkzeugs, dem Fließwegende 9, zum Liegen kommt. Die untere Seite des Vorformlings 3 liegt an der unteren inneren Seitenfläche 10 des Spritzgusswerkzeugs 6 an.

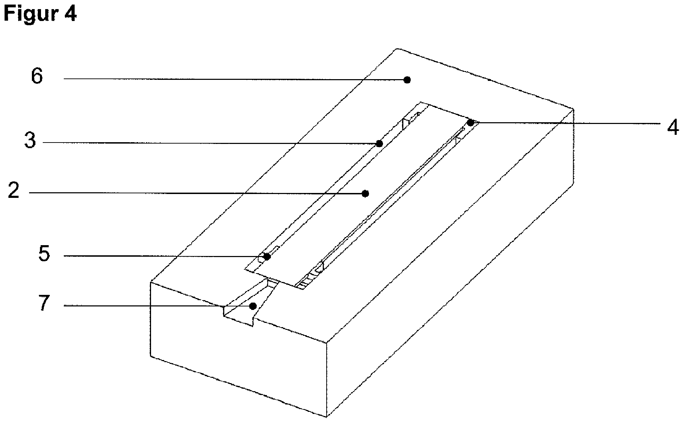

Fig. 4 zeigt anhand einer schematischen Darstellung einen in ein Spritzgusswerkzeug 6 eingelegten Vorformling 3. Der Spreizkeil 5 befindet sich dabei in seiner Ausgangsposition in der ersten Hälfte des Faserbändchens 2 vom Schmelzekanal 7 aus gesehen.

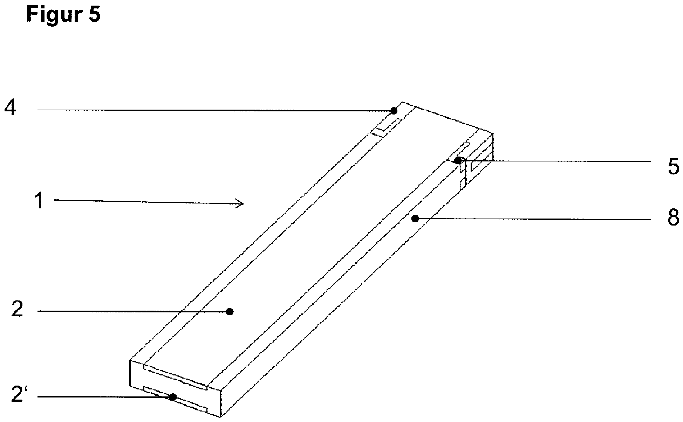

Fig. 5 zeigt anhand einer schematischen Darstellung den Aufbau eines nach dem erfindungsgemäßen Verfahren hergestellten Formkörpers 1. Der Spreizkeil 5 befindet sich in seiner Endposition benachbart zur Halterung 4, in die er durch die zweite Kunststoffmatrix 8 geschoben wurde.

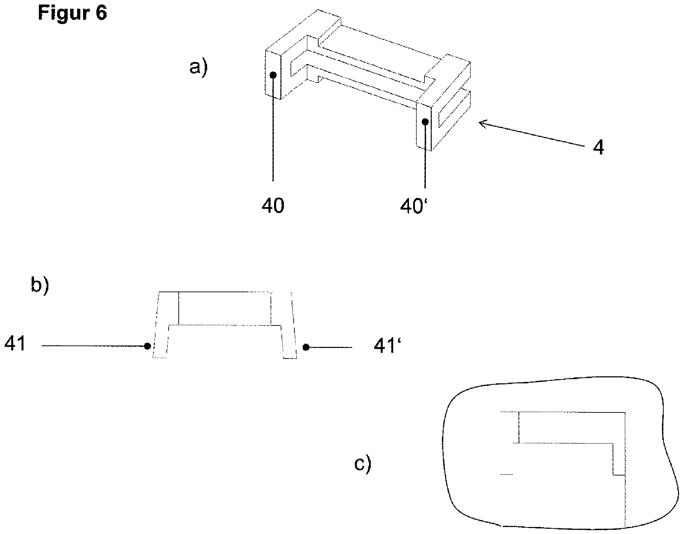

Fig. 6 zeigt anhand einer schematischen Darstellung mögliche Aufbauten von Halterungen 4. Fig. 6a zeigt eine Halterung 4 mit Vorspanngelenken 40, 40', die eine elastische Zentrierung des Vorformlings 3 gegenüber dem Spritzgusswerkzeug 6 gewährleisten. Figur 6b zeigt eine Halterung mit seitlichen Anlagearmen 41, 41', die eine verliersichere elastische Positionierung des Vorformlings 3 im Spritzgießwerkzeug 6 gewährleisten. Aus Figur 6b geht hervor, dass die Anlagearme 41, 41' nach außen vorgebogen sind. Fig. 6c zeigt eine im Spritzgusswerkzeug 6 eingelegte Halterung 4.

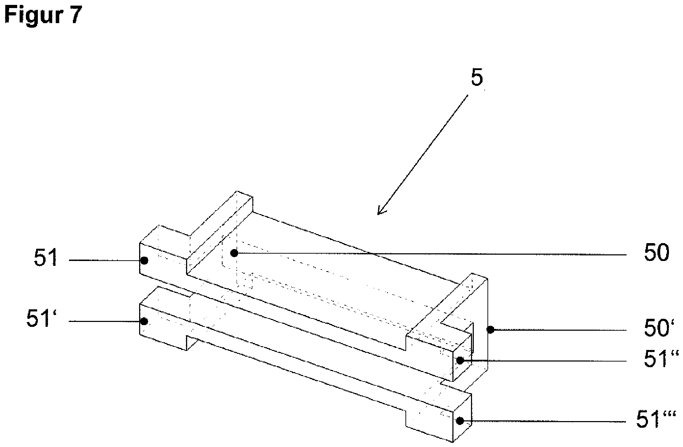

Fig. 7 zeigt anhand einer schematischen Darstellung den Aufbau eines Spreizkeils 5, der über Spritzguss- oder Rapid-Prototyping-Verfahren hergestellt werden kann. Der Spreizkeil weist Vorspanngelenke 50, 50' sowie Zentriernoppen 51, 51', 51", 51"' auf, die eine sichere Höhen- und Seitenführung der Faserbändchen 2, 2' gegenüber dem Spritzgusswerkzeug 6 gewährleisten.

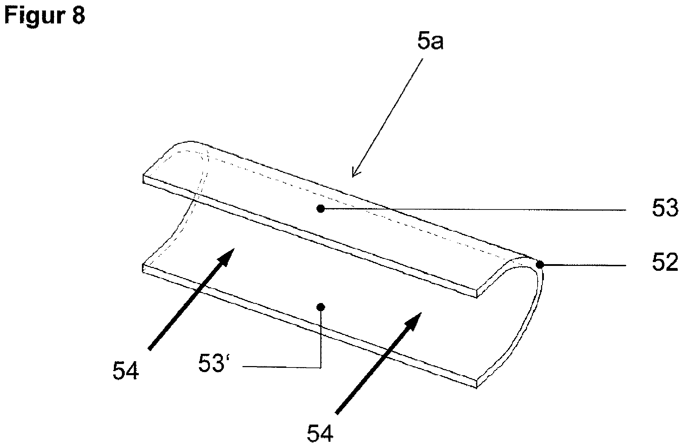

Fig. 8 zeigt anhand einer schematischen Darstellung den Aufbau eines Spreizkeils (5a), der über Extrusionsverfahren hergestellt werden kann. Der Spreizkeil (5a) beinhaltet das Vorspanngelenk 52 und die Anlageflächen 53, 53' gegen die Faserbändchen 2 und die Kavitätenflächen des Spritzgusswerkzeuges 6. Die zweite Kunststoffmatrix 8 strömt dabei aus Richtung 54 ein.

Weiter soll anhand des nachfolgendes Beispiels und des Vergleichsbeispiels der erfindungsgemäße Gegenstand näher erläutert werden, ohne diesen auf die hier gezeigten spezifischen Ausführungsformen einschränken zu wollen.

In Tabelle 1 sind die für das Beispiele und das Vergleichsbeispiel eingesetzten Chemikalien aufgeführt.

**Tabelle 1:**

| Stoff | Handelsname | Lieferant |
|---|---|---|
| PA MACM 12 | Grilamid TR90 | EMS-CHEMIE AG (CH) |
| Faserband | Grilamid LCT-30^{a} | EMS-CHEMIE AG (DE) |

| | | |
|---|---|---|
| a) Es handelt sich um ein Faserband mit einer Matrix aus PA 12 und Kohlefasern als Verstärkungsmittel. | | |

### Herstellung des Zugstabs aus PA MACM 12 TR90 (VB1)

MACM 12 wurde von der EMS-CHEMIE AG bezogen und die ISO-Prüfkörper wurden auf einer Spritzgussmaschine Engel e-Victory 120 bei Zylindertemperaturen von 250°C bis 260°C der Zonen 1 bis 4 und einer Werkzeugtemperatur von 80°C verspritzt.

### Herstellung des nach dem erfindungsgemässen Verfahren verstärkten Zugstabs aus Grilamid TR90 (B1)

Ein Vorformling gemäss Figur 2 aus Grilamid LCT-30 und einer über Rapid-Prototyping hergestellten Halterung gemäss Figur 6 und einem über Rapid-Prototyping hergestellten Spreizkeil gemäss Figur 7 wurde hergestellt und gemäss Figur 4 in ein Spritzgusswerkzeug eingelegt. Danach wurde MACM 12 auf einer Spritzgussmaschine Engel e-Victory 120 bei Zylindertemperaturen von 250°C bis 260°C der Zonen 1 bis 4 und einer Werkzeugtemperatur von 80°C eingespritzt, wonach ein verstärkter ISO-Prüfkörper erhalten wurde.

Die in Tabelle 2 angegebenen mechanischen Eigenschaften wurden wie folgt bestimmt.

### Bestimmung des Zugmoduls

Die Bestimmung des Zugmoduls erfolgte gemäß der ISO 527 mit einer Zuggeschwindigkeit von 1 mm/min an einem ISO-Zugstab gemäß der Norm ISO 3167, Typ A mit den Dimensionen 170 x 20/10 x 4 mm bei einer Temperatur von 23 °C.

### Bestimmung der Bruchfestigkeit

Die Bestimmung der Bruchfestigkeit erfolgte gemäß der ISO 527 mit einer Zuggeschwindigkeit von 5 mm/min an einem ISO-Zugstab gemäß der Norm ISO 3167, Typ A mit den Dimensionen 170 x 20/10 x 4 mm bei einer Temperatur von 23 °C.

**Tabelle 2: Mechanische Eigenschaften.**

| | B1 | VB1 |
|---|---|---|
| Zugmodul [MPa] | 10'000 | 1'600 |
| Bruchfestigkeit [MPa] | 200 | 160 |

## Patentansprüche

1. Verfahren zur Herstellung eines Formkörpers (1) mit mindestens einer Verstärkung mittels unidirektional orientierten und in einer ersten Kunststoffmatrix eingebetteten Fasern mit folgenden Schritten:
a) Bereitstellen eines Vorformlings (3) enthaltend mindestens ein Faserbändchen (2, 2'), wobei in Längsrichtung des mindestens einen Faserbändchens (2, 2') an einem Ende eine Halterung (4) und am anderen Ende zumindest eine entlang der Längsrichtung des mindestens einen Faserbändchen (2, 2') bewegliche Fixiereinheit (5) angebracht wird,
b) Einlegen und Fixieren des Vorformlings (3) in ein Spritzgusswerkzeug (6), wobei das Ende mit der Halterung (4) am Fließwegende (9) des Spritzgusswerkzeugs (6) angeordnet wird,
c) Einspritzen einer zweiten Kunststoffmatrix (8) durch den Schmelzekanal (7), so dass die Fixiereinheit (5) durch den Schmelzestrom zum anderen Ende des Vorformlings (3) transportiert wird sowie
d) Erkalten und Aushärten des Formkörpers (1).

2. Verfahren nach Anspruch 1,
**dadurch gekennzeichnet, dass** die Fixiereinheit (5) so angeordnet ist, dass das mindestens eine Faserbändchen (2, 2') an einer inneren Seitenfläche (10) des Spritzgusswerkzeugs (6) anliegt und die Fixiereinheit (5) während des Einspritzens so geführt wird, dass die zweite Kunststoffmatrix (8) und das mindestens eine Faserbändchen (2, 2') vollflächig und planar miteinander verbunden sind und das mindestens eine Faserbändchen (2, 2') zumindest bereichsweise eine Oberfläche des Formkörpers (1) bildet.

3. Verfahren nach einem der vorhergehenden Ansprüche,
**dadurch gekennzeichnet, dass** die Fixiereinheit (5) so angeordnet ist, dass zwei Faserbändchen (2, 2') an gegenüberliegenden inneren Seitenflächen des Spritzgusswerkzeugs (6) anliegen und die Fixiereinheit (5) während des Einspritzens so geführt wird, dass die zweite Kunststoffmatrix (8) und die Faserbändchen (2, 2') vollflächig und planar miteinander verbunden sind und die beiden Faserbändchen (2, 2') zumindest bereichsweise gegenüberliegende Oberflächen des Formkörpers (1) bilden.

4. Verfahren nach einem der vorhergehenden Ansprüche,
**dadurch gekennzeichnet, dass** die Fixiereinheit in der ersten Hälfte, bevorzugt im ersten Drittel des Längenabschnitts der Faserbändchen (2, 2') angebracht wird, der dem Ende mit der Halterung (4) gegenüberliegt, besonders bevorzugt ist es die Fixiereinheit (5) am Ende des Vorformlings anzubringen.

5. Verfahren nach einem der vorhergehenden Ansprüche,
**dadurch gekennzeichnet, dass** die erste und/oder zweite Kunststoffmatrix ausgewählt ist aus der Gruppe bestehend aus Acetalharze, flüssigkristalline Polymere, Polyacrylate, Polymethacrylate, olefinische und cycloolefinische Polymere, Polyamide, Polyamidelastomere, insbesondere Polyesteramide, Polyetheramide und Polyetheresteramide, Polyamidimide, Polyarylether beeinhaltend Polyphenylether, Polycarbonate, Polysulfone, Polyetherimide, Polyimide, Polyester, Polyester-Polycarbonate, Polyether, Polyoxyethylene, Polystyrol, vinylische Polymere wie Polyvinylchlorid und Polyvinylacetat, oder Mischungen aus einem oder mehreren der aufgezählten Materialien, insbesondere ABS, MBS, SAN, PC und PMMA, besteht oder diese im Wesentlichen enthält.

6. Verfahren nach Anspruch 5,
**dadurch gekennzeichnet, dass** die erste und/oder zweite Kunststoffmatrix einen Schmelzpunkt im Bereich von 50 bis 500 °C, bevorzugt von 170 bis 400 °C und besonders bevorzugt von 170 bis 350 °C aufweist, wobei die erste Kunststoffmatrix bevorzugt einen um 1 bis 300°C, besonders bevorzugt einen um 20 bis 150°C niedrigeren Schmelzpunkt als die zweite Kunststoffmatrix aufweist.

7. Verfahren nach einem der vorhergehenden Ansprüche,
**dadurch gekennzeichnet, dass** die Fixiereinheit (5) ausgewählt ist aus der Gruppe bestehend aus einem Spreizkeil, block-, pfropfen- und pfeilförmigen Fixiereinheiten, die bevorzugt ein Federelement enthalten, wobei der Spreizkeil besonders bevorzugt ist.

8. Verfahren nach einem der vorhergehenden Ansprüche,
**dadurch gekennzeichnet, dass** die Fixiereinheit (5) und die Halterung (4) aus dem gleichen Material bestehen, insbesondere aus dem gleichen Material der ersten und/oder zweiten Kunststoffmatrix besteht oder diese im Wesentlichen enthält.

9. Verfahren nach einem der vorhergehenden Ansprüche,
**dadurch gekennzeichnet, dass** der nach dem Aushärten der Fixiereinheit (5) und die Halterung (4) enthaltende Teil des Formkörpers (1), insbesondere mittels Schneiden, Sägen, Quetschen, Knicken, Laserbehandlung, Wasserstrahlen oder Kombinationen hiervon, abgetrennt wird.

## Claims

1. Method for the production of a moulding (1) having at least one reinforcement by means of fibres which are orientated unidirectionally and embedded in a first plastic matrix, having the following steps:
a) Providing a preform (3) comprising at least one fibre ribbon (2, 2'), a mounting (4) being fitted in the longitudinal direction of the at least one fibre ribbon (2, 2') at one end and, at the other end, at least one fixing unit (5) which is moveable along the longitudinal direction of the at least one fibre ribbon (2, 2') being fitted,
b) Inserting and fixing the preform (3) in an injection moulding die (6), the end with the mounting (4) being disposed at the outflow end (9) of the injection moulding die (6),
c) Injecting a second plastic matrix (8) through the melt channel (7) so that the fixing unit (5) is transported by the melt flow to the other end of the preform (3) and also
d) Cooling and hardening the moulding (1).

2. Method according to claim 1,
**characterised in that** the fixing unit (5) is disposed such that the at least one fibre ribbon (2, 2') abuts against an inner side face (10) of the injection moulding die (6) and the fixing unit (5) is guided during the injection such that the second plastic matrix (8) and the at least one fibre ribbon (2, 2') are connected to each other over the whole surface and in a planar manner and the at least one fibre ribbon (2, 2') forms a surface of the moulding (1) at least in regions.

3. Method according to one of the preceding claims,
**characterised in that** the fixing unit is disposed such that two fibre ribbons (2, 2') abut against oppositely situated inner side faces of the injection moulding die (6) and the fixing unit (5) is guided during the injection such that the second plastic matrix (8) and the fibre ribbons (2, 2') are connected to each other over the whole surface and in a planar manner and the two fibre ribbons (2, 2') form oppositely situated surfaces of the moulding (1) at least in regions.

4. Method according to one of the preceding claims,
**characterised in that** the fixing unit (5) is fitted in the first half, preferably in the first third of the longitudinal portion of the fibre ribbons (2, 2') which is situated opposite the end with the mounting (4), it is particularly preferred to fit the fixing unit (5) at the end of the preform.

5. Method according to one of the preceding claims,
**characterised in that** the first and/or second plastic matrix is selected from the group consisting of acetal resins, liquid-crystalline polymers, polyacrylates, polymethacrylates, olefinic and cycloolefinic polymers, polyamides, polyamide elastomers, in particular polyester amides, polyether amides and polyether ester amides, polyamide imides, polyarylethers comprising polyphenylethers, polycarbonates, polysulphones, polyetherimides, polyimides, polyesters, polyester polycarbonates, polyethers, polyoxyethylenes, polystyrene, vinyl polymers such as polyvinylchloride and polyvinylacetate, or mixtures of one or more of the listed materials, in particular ABS, MBS, SAN, PC and PMMA or substantially comprises these.

6. Method according to claim 5,
**characterised in that** the first and/or second plastic matrix has a melting point in the range of 50 to 500°C, preferably of 170 to 400°C and particularly preferred of 170 to 350°C, the first plastic matrix having preferably a lower melting point by 1 to 300°C, particularly preferred by 20 to 150°C, than the second plastic matrix.

7. Method according to one of the preceding claims,
**characterised in that** the fixing unit (5) is selected from the group consisting of an expanding wedge, block-, plug- and arrow-shaped fixing units which preferably comprise a spring element, the expanding wedge being particularly preferred.

8. Method according to one of the preceding claims,
**characterised in that** the fixing unit (5) and the mounting (4) consist of the same material, in particular consists of the same material of the first and/or second plastic matrix or substantially comprises this.

9. Method according to one of the preceding claims,
**characterised in that** the part of the moulding (1) comprising the fixing unit (5) and the mounting (4), after hardening, is separated in particular by means of cutting, sawing, squeezing, bending, laser treatment, water jets or combinations hereof.

## Revendications

1. Procédé de fabrication d'un corps moulé (1) avec au moins un renforcement au moyen de fibres orientées de manière unidirectionnelle et incorporées dans une matrice de matière plastique, comprenant les étapes suivantes :
a) préparation d'une préforme (3) contenant au moins une bandelette de fibres (2, 2'), moyennant quoi, dans la direction longitudinale de l'au moins une bandelette de fibres (2, 2'), au niveau d'une extrémité, est disposé un support (4) et, au niveau de l'autre extrémité, est disposée au moins une unité de fixation (5) mobile le long de la direction longitudinale de l'au moins une bandelette de fibres (2, 2'),
b) insertion et fixation de la préforme (3) dans un outil de moulage par injection (6), l'extrémité avec le support (4) étant disposée au niveau de l'extrémité d'écoulement (9) de l'outil de moulage par injection (6),
c) injection d'une deuxième matrice de matière plastique (8) à travers le canal de coulée (7), de façon à ce que l'unité de fixation (5) soit transportée par le flux de coulée vers l'autre extrémité de la préforme (3),
d) refroidissement et durcissement du corps moulé (1).

2. Procédé selon la revendication 1,
**caractérisé en ce que** l'unité de fixation (5) est disposée de façon à ce que l'au moins une bandelette de fibres (2, 2') s'appuie contre une face latérale interne (10) de l'outil de moulage par injection (6), et que l'unité de fixation (5) soit guidée pendant l'injection, de sorte à ce que la deuxième matrice de matière plastique (8) et l'au moins une bandelette de fibres (2, 2') soient reliées entre elles entièrement et de manière planaire et l'au moins une bandelette de fibres (2, 2') forme, au moins à certains endroits, une surface du corps moulé (1).

3. Procédé selon l'une des revendications précédentes,
**caractérisé en ce que** l'unité de fixation (5) est disposée de façon à ce que deux bandelettes de fibres (2, 2') s'appuient contre des faces latérales opposées de l'outil de moulage par injection (6), et que l'unité de fixation (5) soit guidée pendant l'injection, de sorte à ce que la deuxième matrice de matière plastique (8) et les bandelettes de fibres (2, 2') soient reliées entre elles entièrement et de manière planaire et les deux bandelettes de fibres (2, 2') forment, au moins à certains endroits, des surfaces opposées du corps moulé (1).

4. Procédé selon l'une des revendications précédentes,
**caractérisé en ce que** l'unité de fixation est montée dans la première moitié, de préférence dans le premier tiers de la portion longitudinale des bandelettes de fibres (2, 2'), qui fait face à l'extrémité avec le support (4), plus particulièrement il est préférable de monter l'unité de fixation (5) à l'extrémité de la préforme.

5. Procédé selon l'une des revendications précédentes,
**caractérisé en ce que** la première et/ou la deuxième matrice de matière plastique est sélectionnée dans le groupe constitué de résines acétal, de polymères à cristaux liquides, de polyacrylates, de polyméthacrylates, de polymères oléfines et cyclooléfines, de polyamides, d'élastomères polyamides, plus particulièrement de polyesteramides, de polyétheramides et de polyétheresteramides, de polyamidimides, de polyaryléther contenant des polyphényléthers, de polycarbonates, de polysulfones, de polyétherimides, de polyimides, de polyester, de polyester-polycarbonates, de polyéther, de polyoxyéthylènes, de polystyrol, de polymères vinyliques comme le polychlorure de vinyle et le polyacétate de vinyle, ou est constitué de mélanges d'un ou plusieurs des matériaux énumérés, plus particulièrement ABS, MBS, SAN, PC et PMMA ou contient essentiellement ceux-ci.

6. Procédé selon la revendication 5,
**caractérisé en ce que** la première et/ou la deuxième matrice de matière plastique présente un point de fusion compris entre 50 et 500 °C, de préférence entre 170 et 400 °C et plus particulièrement de préférence entre 170 et 350 °C, la première matrice de matière plastique présentant un point de fusion plus faible de 1 à 300 °C, plus particulièrement de préférence un point de fusion plus faible de 20 à 150 °C par rapport à la deuxième matrice de matière plastique.

7. Procédé selon l'une des revendications précédentes,
**caractérisé en ce que** l'unité de fixation (5) est sélectionnée dans le groupe constitué d'une cale d'écartement, d'unités de fixation en forme de blocs, de bouchons et de flèches, qui contiennent de préférence un élément à ressort, la cale d'écartement étant particulièrement préférée.

8. Procédé selon l'une des revendications précédentes,
**caractérisé en ce que** l'unité de fixation (5) et le support (4) sont constitués du même matériau, plus particulièrement du même matériau que la première et/ou la deuxième matrice de matière plastique ou contiennent essentiellement celui-ci.

9. Procédé selon l'une des revendications précédentes,
**caractérisé en ce que**, après le durcissement de l'unité de fixation (5), la partie du corps moulé (1) contenant le support (4), est sectionnée notamment au moyen d'une coupe, d'un sciage, d'un écrasement, d'un pliage, d'un traitement laser, d'un jet d'eau ou de combinaisons de ces méthodes.
